# EUROPEAN PATENT SPECIFICATION

(11) **EP 0 517 562 B1**
(45) Date of publication and mention of the grant of the patent: **17.08.1994**
(21) Application number: 92401406.1
(22) Date of filing: 22.05.1992
(51) Int. Cl.: F16B 21/07, E03D 9/02

(54) **Safety opening device, especially for blocks, intended for lavatories**
Sicherheitsöffnungsvorrichtung, insbesondere für Reinigungsblöcke für Toiletten bestimmt
Dispositif d'ouverture de sécurité, notamment pour blocs destinés aux WC

(30) Priority: 04.06.1991 FR 9106739
(43) Date of publication of application: 09.12.1992
(73) Proprietor: Reckitt & Colman France SA, 91748 Massy Cédex (FR)
(72) Inventor: Marechal, Patrick, La Musse, F-28410 BU (FR)
(74) Representative: Rinuy, Santarelli

(56) References cited:
- EP-A- 0 092 283
- EP-A- 0 409 347
- DE-A- 2 631 018

## Description

The present invention relates to a holder having a safety opening device, especially for blocks intended for lavatories.

For some years, industrial companies have given increasing consideration to safety, especially where small children are concerned. It seems essential, in fact, to ensure that a child who has not reached the age of discretion should not easily be able to open a receptacle which, for example, contains a toxic or corrosive product. Indeed, such receptacles are very often found in every house. Mention may be made, for example, of acids such a hydrochloric or sulphuric acid, bases such as aqueous ammonia, hypochlorites of bleach or unblockers based on soda or potash, solvents such as trichloroethylene, detergents such as cleaning products, blocks for dispensing lavatory disinfecting, deodorising or descaling products, etc. Practical and effective devices allowing safety opening are therefore still being sought.

EP-A-0 409 347 discloses a coupling system for a housing comprising a free standing lug fitted to an inside wall of one of the parts and a stop fitted to the other part. A recess is formed in a wall of one part in the vicinity of the lug in order to allow through an elongated end of a tool by which means the lug may be pressed off the stop. The coupling system is characterized in that it is arranged in such a fashion that the contact faces of the lug and stop run essentially parallel to the wall with the recess.

DE-A-2 631 018 discloses a holder comprising a foraminous basket forming a receptable for receiving a block of water-soluble product. The basket is formed of two substantially identical parts which are articulated so as to be able to meet, and a fastening means of the male/female type is integrally moulded on to one of these two parts to ensure closing of the basket. At least one U-shaped suspension hook is also integrally moulded with the basket.

The subject of the present invention is, therefore, a holder having an opening/closing device of the male/female type, characterized in that the opening/closing device comprises
- a female part (F), comprising a slideway which has, on one of its walls, a limit stop (1) followed by an orifice (5) through the walls of the part, into which slideway is introduced
- a male part (M) comprising a nose (3) capable of being introduced into the slideway and, by means of its nose, of being blocked against removal after it has passed the limit stop (1), at least part of the nose (3) being located under the orifice (5), as well as
- a tongue (7) attached to the holder comprising a nib (6) of a size and shape suitable to be introduced into the orifice (5) and, by exerting pressure on the nose (3), to release the latter in order to allow opening.

The male part, female part and tongue can be three separate parts made of different materials. Preferably, however, the male part, female part and tongue belong to a one-piece device, preferably to a lavatory block suspension device.

The stop contained in the female part can be of any shape. But to make the introduction of the male part easier, the longitudinal section of the stop in the direction of introduction of the male part would preferably have a tapering shape, the most tapered part pointing towards the opening and the opposite part corresponding to the stop.

The orifice will preferably be located in the vicinity of the rear part of the stop, namely 0.5 to 3 mm from this. It can be of any shape, its size being suitable for receiving the release nib.

The male part is capable of cooperating with the female part so as to be blocked after introduction.
The length of the introduced part is not decisive and can range, for example, from 5 to 20 mm where a lavatory block support is concerned. Its end would advantageously be of a shape capable of making introduction into the female part easier. Its cross-section can therefore be especially triangular or trapezoidal.

It can be seen clearly that, to make introduction easier, if either the stop or the end of the male part can be given a suitable shape, for example corresponding to a substantially triangular cross-section, both elements can be given this suitable shape.

However, to make introduction even easier, the female part and also preferably the male part will have some properties of elasticity which they can acquire either by their nature, for example by the use of a plastic, or also by their thickness, a thinning of the walls imparting increased elasticity, though without impairing the safety of the closure.

The cross-section of the female part can be of variable shape, for example oval, circular, rectangular, square, etc. It is not essential that the perimeter of the female part is uninterrupted. It can be interrupted opposite the stop, from the moment when the male part remains retained in such a way that only the use of the opening nib makes opening possible.

Under other preferred conditions, the nose has a shape which generates a force moving away the male part during the opening of the device. This shape can, for example, be the triangular shape mentioned above. The penetration of the nib into the orifice will therefore give rise to two resultant forces:
- a vertical pressure on the closing nib, releasing the latter from the stop, and
- a thrust perpendicular to this and tending to eject the male part out of the female part.

In a specially preferred embodiment, the nose of the male part, in the blocked position in the female part, has its end located approximately in the middle of the orifice. To increase the thrust effect further, the end of the nib introduced into the orifice will in this case advantageously have a, for example, round or oval shape.

Although the female part and the male part can slide freely in the closed position, until the nose comes into contact with the stop, it is preferable if the nose is in permanent contact with the stop in this position. The male part therefore advantageously comprises at least one penetration stop limiting the penetration as soon as the closing position is reached.

The device according to the present invention can be used particularly for various containers, such as flasks, bottles, boxes, etc. Where boxes are concerned, mention may be made especially of the supports (or cages) intended for receiving lavatory blocks, for example deodorising, colouring, disinfecting, descaling blocks, etc.

Another subject of the present invention is, therefore, containers characterised in that they comprise an above-described opening device, especially supports for blocks intended for lavatories.

The invention will be understood better by reference to the accompanying drawings in which:
Figure 1 shows a longitudinal section through a device according to the present invention;
Figure 2 shows a local cross-section according to AA′ of Figure 1 ;
Figure 3 shows a local cross-section according to BB′ of Figure 1 ;
Figure 4 shows a section through a lavatory block support equipped with a device according to the present invention in the closed position 4A and open position 4B;
Figure 5 shows a local cross-section, similar to that of Figure 3, through a female part with an uninterrupted perimeter, and
Figure 6 shows a local cross-section, similar to that of Figure 3, through a female part with an interrupted perimeter, but of rounded shape.

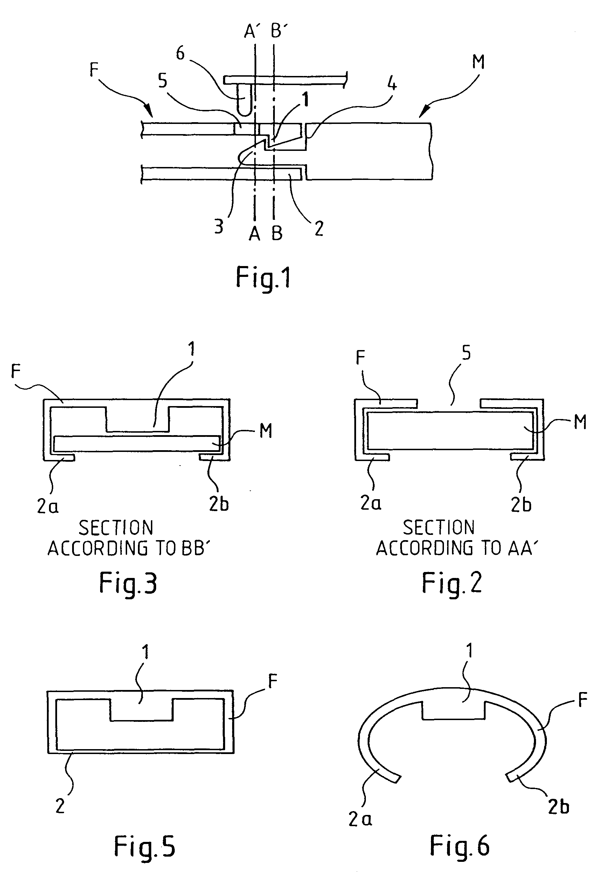

Figure 1, showing a longitudinal section through a device according to the present invention, illustrates in the left-hand part the female element F, in the right-hand part the male element and above these the opening nib located on a tongue. Shown more specifically is the blocking stop 1 of substantially triangular cross-section located on the female part which, in cooperation with a stay 2 placed opposite the stop, blocks the nose 3 located at the end of the male part. The male part is itself equipped with at least one penetration stop 4 limiting its penetration into the female part and preventing the relative sliding of the two parts in the closed position. Both the nose 3 and the limit stop 1 have substantially the cross-section of a right-angled triangle, thus allowing the male part to be introduced easily. The penetration of the nose 3 is limited by the penetration stop 4, its withdrawal is blocked as a result of the cooperation of the nose 3 and stop 1, and its end is located level with the opening orifice 5 approximately in the middle of this. The penetration of the nib 6, with which the tongue 7 is equipped, into the orifice 5 generates, as a result of the mutually suited size of the nib 6 and of the orifice 5, both vertical and horizontal resultant forces in cooperation with the inclined section of the nose 3. The vertical resultant force releases the nose 3 from the limit stop 1 and the horizontal resultant ejects the male part, thus automatically bringing about opening. The stay gives the device a high degree of safety, preventing opening without the use of the nib, for example by twisting the parts if these are flexible.

Figures 2 and 3 show the female element F which is equipped with two stays 2a and 2b and into which element the male element M is inserted; the orifice 5 can also be seen in Figure 2 and the limit stop 1 in Figure 3.

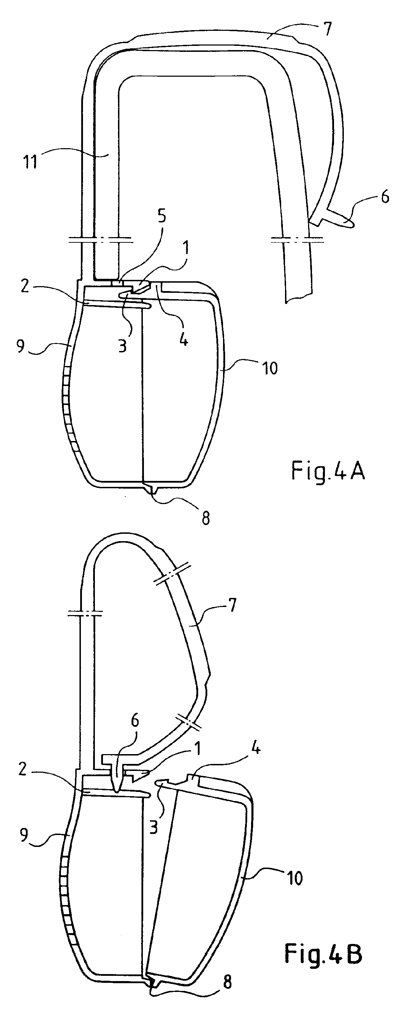

Figure 4 illustrates the use of the device on a lavatory block support. It can be seen that the support is one-piece and consists of three main parts in continuity with one another: the tongue 7 carrying the nib 6 and two half-shells 9 and 10 articulated on one another by means of a film hinge, namely a reduction of the thickness of the parts to a degree where bending is possible, thereby forming an axis of rotation. The block is then placed in the shell 9 having the tongue and the shell 10 is closed again to form a cage retaining the block (not shown). The support can be opened, for example in order to replace the block. The tongue 7 allows the support to be fastened to the lavatory bowl 11 and carries the opening nib of the support.

Figures 5 and 6 illustrate respectively a female slideway with an uninterrupted perimeter (in this case, the element 2 is preferably thin, for example of a thickness of 0.2 to 0.4 mm for a plastic) and a rounded female slideway with an interrupted perimeter.

## Claims

1. Holder for water-dispersible materials having an opening/closing device of the male/female type, characterized in that the opening/closing device comprises :
- a female part (F), comprising a slideway which has, on one of its walls, a limit stop (1) followed by an orifice (5) through the walls of the part, into which slideway is introduced
- a male part (M) comprising a nose (3) capable of being introduced-into the slideway and, by means of its nose, of being blocked against removal after it has passed the limit stop (1), at least part of the nose (3) being located under the orifice (5), as well as
- a tongue (7) attached to the holder comprising a nib (6) of a size and shape suitable to be introduced into the orifice (5) and, by exerting pressure on the nose (3), to release the latter in order to allow opening.

2. Holder according to claim 1 wherein the nose 3 is held in position under the orifice by means of a penetration stop.

3. Holder according to claim 1 or 2, characterized in that the holder is a lavatory block suspension device.

4. Holder according to any one of claims 1 to 3, characterized in that the female part and the male part have properties of elasticity.

5. Holder according to any one of claims 1 to 4 characterized in that the nose (3) has a shape generating a force-moving away the male part (M) during the opening of the device.

6. Holder according to claim 5, characterized in that the nose (3) of the male part has its end located approximatively in the middle of the orifice.

7. Holder according to any one of claims 2 to 6, characterized in that the penetration stop is mounted on the male part (M) so as to limit the penetration as soon as the closing position is reached.

8. Holder according to claim 3, characterized in that the tongue (7) allows the holder to be fastened to the lavatory bowl (11).

9. Holder according to any one of claims 1 to 8, characterized in that the male part has a tapering shape, the most tapered part pointing towards the opening and the opposite part corresponding to the stop.

10. Holder according to claim 5, characterized in that the cross section of the nose (3) has a substantially triangular shape.

## Patentansprüche

1. Halter für wasser-dispergierbare Materialien, der eine Öffnungs/Verschluß-Vorrichtung vom Steck/Aufnahme-Typ hat, dadurch gekennzeichnet, daß die Öffnungs/Verschluß-Vorrichtung aufweist:
- ein Aufnahmeteil (F), das einen Gleitweg aufweist, der an einer seiner Wände einen Begrenzungsanschlag (1) gefolgt von einer Öffnung (5) durch die Wände des Teils hat, wobei in den Gleitweg eingeführt ist
- ein Steckteil (M), das eine Nase (3) aufweist, die dazu in der Lage ist, in den Gleitweg eingeführt zu werden, und das mittels seiner Nase gegen ein Entfernen arretiert ist, nachdem sie den Begrenzungsanschlag (1) passiert hat, wobei zumindest ein Teil der Nase (3) unter der Öffnung (5) angeordnet ist, sowie
- eine Zunge (7), die am Halter angebracht ist und die einen Haken (6) mit einer Größe und einer Form hat, der dazu geeignet ist, in die Öffnung (5) eingeführt zu werden und, indem Druck auf die Nase (3) ausgeübt wird, letztere freigeben kann, um ein Öffnen zu erlauben.

2. Halter gemäß Anspruch 1, wobei die Nase (3) in Position unter der Öffnung mittels eines Eindringanschlags gehalten wird.

3. Halter gemäß Anspruch 1 oder 2, dadurch gekennzeichnet, daß der Halter eine Aufhängungsvorrichtung für einen Toiletten-Reinigungsblock ist.

4. Halter gemäß einem der Ansprüche 1 bis 3, dadurch gekennzeichnet, daß das Aufnahmeteil und das Steckteil Elastizitätseigenschaften haben.

5. Halter gemäß einem der Ansprüche 1 bis 4, dadurch gekennzeichnet, daß die Nase (3) eine Form hat, die eine Kraft erzeugt, die das Steckteil (M) während des Öffnens der Vorrichtung wegbewegt.

6. Halter gemäß Anspruch 5, dadurch gekennzeichnet, daß die Nase (3) des Steckteils mit ihrem Ende ungefähr in der Mitte der Öffnung angeordnet ist.

7. Halter gemäß einem der Ansprüche 2 bis 6, dadurch gekennzeichnet, daß der Eindringanschlag an dem Steckteil (M) derart angeordnet ist, daß das Eindringen begrenzt wird, sobald die Verschlußposition erreicht ist.

8. Halter gemäß Anspruch 3, dadurch gekennzeichnet, daß die Zunge (7) dem Halter erlaubt, an der Toilettenschüssel (11) befestigt zu werden.

9. Halter gemäß einem der Ansprüche 1 bis 8, dadurch gekennzeichnet, daß das Steckteil eine konische Form hat, wobei der konische Abschnitt in Richtung zur Öffnung hin weist und wobei der gegenüberliegende Abschnitt dem Anschlag entspricht.

10. Halter gemäß Anspruch 5, dadurch gekennzeichnet, daß der Querschnitt der Nase (3) eine im wesentlichen dreieckige Form hat.

## Revendications

1. Support pour des matières dispersibles dans l'eau ayant un dispositif d'ouverture-fermeture du type mâle-femelle, caractérisé en ce que le dispositif d'ouverture-fermeture comporte :
- une partie femelle (F), comportant une glissière qui a, sur l'une de ses parois, une butée d'arrêt (1) suivie d'un orifice (5) à travers les parois de la partie, glissière dans laquelle est introduite
- une partie mâle (M) comportant un bec (3) capable de s'introduire dans la glissière et, à l'aide de son bec, de se bloquer, pour ne pas pouvoir être enlevé, après qu'il a passé la butée d'arrêt (1), au moins une partie du bec (3) étant située sous l'orifice (5), ainsi que
- une languette (7) reliée au support, comportant un ergot (6) de taille et de forme adaptées à s'introduire dans l'orifice (5) et, par l'application d'une pression sur le bec (3), à libérer ce dernier pour permettre l'ouverture.

2. Support selon la revendication 1, dans lequel le bec (3) est maintenu en position sous l'orifice au moyen d'une butée d'enfoncement.

3. Support selon la revendication 1 ou 2, caractérisé en ce que le support est un dispositif de suspension de bloc pour WC.

4. Support selon l'une quelconque des revendications 1 à 3, caractérisé en ce que la partie femelle et la partie mâle ont des propriétés d'élasticité.

5. Support selon l'une quelconque des revendications 1 à 4, caractérisé en ce que le bec (3) a une forme générant une force d'écartement de la partie mâle (M) lors de l'ouverture du dispositif.

6. Support selon la revendication 5, caractérisé en ce que le bec (3) de la partie mâle a son extrémité située approximativement au milieu de l'orifice.

7. Support selon l'une quelconque des revendications 2 à 6, caractérisé en ce que la butée d'enfoncement est montée sur la partie mâle (M) afin de limiter l'enfoncement dès que la position de fermeture est atteinte.

8. Support selon la revendication 3, caractérisé en ce que la languette (7) permet au support d'être fixé à la cuvette (11) de WC.

9. Support selon l'une quelconque des revendications 1 à 8, caractérisé en ce que la partie mâle a une forme effilée, la partie la plus effilée étant tournée vers l'ouverture et la partie opposée correspondant à la butée.

10. Support selon la revendication 5, caractérisé en ce que la section transversale du bec (3) a une forme sensiblement triangulaire.
